**Europäisches Patentamt**

**European Patent Office**

**Office européen des brevets**

(19)

(11) Publication number : **0 347 958 B1**

# (12) EUROPEAN PATENT SPECIFICATION

(45) Date of publication of patent specification :
**16.09.92 Bulletin 92/38**

(51) Int. Cl.⁵ : **B60J 9/02, B60J 7/11, B60J 7/22**

(21) Application number : **89201170.1**

(22) Date of filing : **09.05.89**

(54) **Vent and escape hatch.**

The file contains technical information submitted after the application was filed and not included in this specification

(30) Priority : **20.06.88 NL 8801563**

(43) Date of publication of application :
**27.12.89 Bulletin 89/52**

(45) Publication of the grant of the patent :
**16.09.92 Bulletin 92/38**

(84) Designated Contracting States :
**DE FR GB IT NL SE**

(56) References cited :
**EP-A- 0 094 257**
**EP-A- 0 151 734**

(56) References cited :
**EP-A- 0 249 268**
**DE-B- 1 163 178**
**NL-A- 8 603 263**
**US-A- 2 845 016**
**US-A- 4 101 159**

(73) Proprietor : **Vermeulen-Hollandia Octrooien II B.V.**
**Küppersweg 9-11**
**NL-2031 EA Haarlem (NL)**

(72) Inventor : **Huyer, Johannes Nicolaas**
**Rietkamp 4**
**NL-1991 BM Velserbroek (NL)**

(74) Representative : **Metman, Karel Johannes et al**
**Octrooibureau Los en Stigter B.V. P.O.Box 20052**
**NL-1000 HB Amsterdam (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a vent and escape hatch for a vehicle, in particular a truck, having an opening in the fixed roof, comprising a stationary frame adapted to be placed around the opening in the fixed roof of the vehicle; a panel movably connected to the frame and movable between a closed position in which it closes the opening in the fixed roof, and an open position; a hinge provided on the hatch, with which at least an upper part of the stationary frame can be swung out together with the panel to provide an emergency escape exit.

Such a vent and escape hatch is known, for instance from the European patent application No. 0 249 268.

It is an object of the invention to further improve such a vent and escape hatch.

For this purpose the vent and escape hatch according to the invention is characterized in that the panel is adapted to be displaced backwardly from the closed position to an open position, and on the front side of the hatch there being provided a wind deflector secured to the swingable part of the frame and projecting upwardly from this frame so as to prevent the wind from blowing into the opening as the vehicle is driven.

In this way the applicability of the hatch is increased and the vent and escape hatch provides more comfort to the passengers since the roof opening can be opened fully or partially by displacing the panel backwardly. The wind deflector preventing the wind from blowing into the opening when the car is driven, is efficient on the one hand and has a simple and cheap structure on the other hand. As the wind deflector is secured to the swingable part of the frame no hinder to the swing out movement will be caused by the wind deflector, while the wind deflector can still be arranged close to the roof opening.

In an embodiment of the vent and escape hatch wherein the panel projects above the plane of the fixed roof in its closed position, it is advantageously if the wind deflector comprises a stationary part inclining upwardly in backward direction from the front edge of the stationary frame and being adapted to the shape of the panel, the upper edge of the stationary part being flush with the upper surface of the panel in the closed position thereof.
edge of the stationary part being flush with the upper surface of the panel in the closed position thereof.

As a result hereof the wind deflector fits close to the panel in the closed position thereof, so that there is provided both a visual and an aerodynamic unity.

The invention will hereafter be elucidated with reference to the drawing showing an embodiment of the vent and escape hatch according to the invention by way of example.

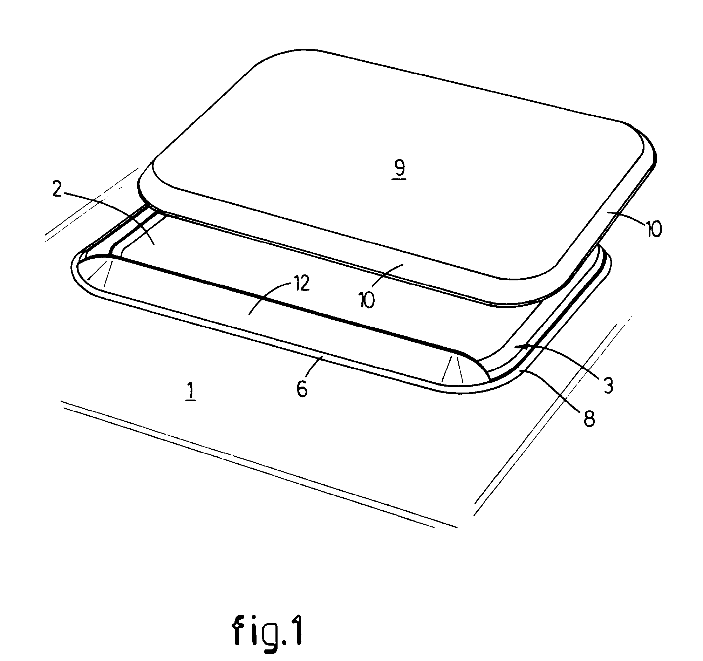

Fig. 1 is a schematic perspective view of an embodiment of the vent and escape hatch according to the invention, in a built-in and open position.

Fig. 2-4 are very schematic longitudinal sectional views of the vent and escape hatch of fig. 1 in the closed position, in the open position and in the swung-out position, respectively.

The drawing shows an embodiment of a vent and escape hatch for a vehicle, in particular a truck, of which the fixed roof 1 is provided with an opening 2. The hatch comprises a stationary frame 3 adapted to be placed around the opening in the fixed roof 1 of the vehicle and to be releaseably secured thereto, as will be elucidated more detailed hereinafter.

The fixed roof 1 of the vehicle is adapted to the stationary frame 3 of the hatch around its opening 2, such that the stationary frame 3 may be secured to the fixed roof 1 in a simple way and fitting well on the fixed roof 1. Adjacent the opening 2 there is formed a circumferential depression 4 and about that an elevation 5 is made in the fixed roof 1 connecting to the surface of the fixed roof by a sloping edge 6. In the built-in condition of the hatch a bottom edge 7 of the stationary frame 3 rests on the depression 4, and a sloping side edge 8 of the stationary frame 3 connecting to the sloping edge 6 of the fixed roof 1.

The hatch comprises a rigid panel 9 which may be made of transparent or opaque material. The panel 9 is movably connected to the stationary frame 3 by means of an adjusting mechanism that may be of conventional structure and does not form part of the invention. The adjusting mechanism may be constructed as is disclosed in the US patent 4.602.815.

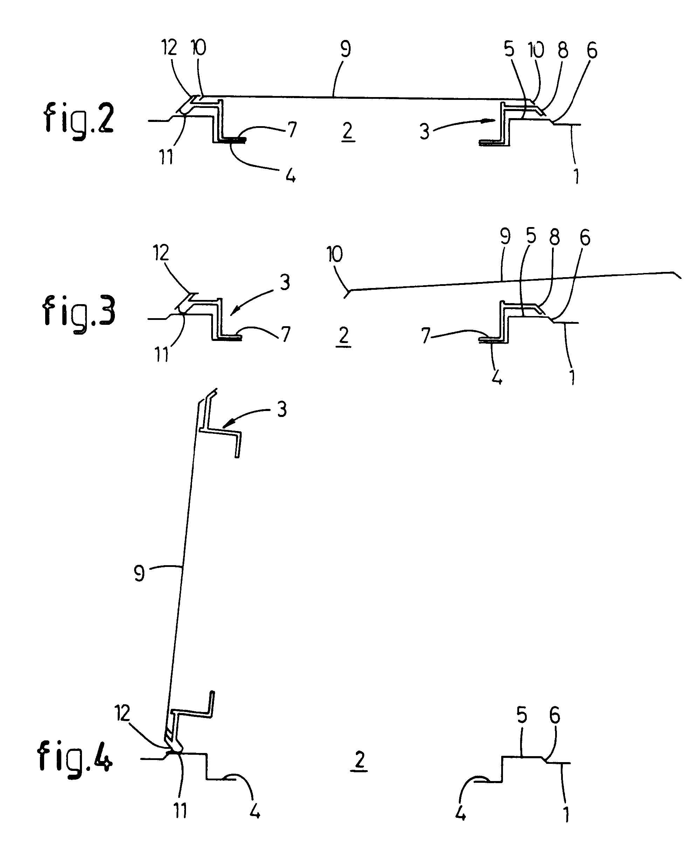

The panel 9 is movable by means of the adjusting mechanism between a closed position (cf. Fig. 2) in which it closes the roof opening 2, and fully or partially opened positions (fig. 3).

In the open positions of the panel 9 it is lifted at its rear edge and is slid backwardly partially above the fixed roof 1, so that the panel partially releases the opening 2 at its front edge.

The panel 9 is generally rectangular and has rounded edges, while the panel 9 has an outwardly and downwardly sloping circumferential edge 10 being aligned with the sloping edge of the stationary frame 3 in the closed position of the panel 9.

The vent and escape hatch is adapted to be thrown out in case of emergencies for providing an emergency escape exit from the interior of the vehicle. For this purpose the stationary frame 3 is locked releaseably to the fixed roof 1 and the stationary frame 3 being hinged to the fixed roof 1 by means of a hinged connection 11 such that, when the entire stationary frame 3 together with the panel 9 is swung outwardly about an angle of more than 90° to the fixed roof 1, the stationary frame 3 releases from the fixed roof and can be separated therefrom (see fig. 4). In this case there is provided an emergency exit having an opening as large as possible.

According to the invention the vent and escape hatch is provided with a wind deflector 12 secured on the stationary frame 3 on the front side of the hatch. The wind deflector 12 consists of a stationary part inclining upwardly in backward direction from the front edge of the stationary frame. The wind deflector 12 is adapted to the shape of the panel 9, the sloping front edge 10 of the panel 9 is lying behind and below the wind deflector 12 in its closed position, and the upper edge of the wind deflector 12 is flush with the upper surface of the panel 9 (see fig. 2). On both lateral ends the wind deflector is turned backwardly in a slightly rounded fashion around the rounded edges of the panel 9, again in the closed position thereof.

Due to the provision of the wind deflector 12 on the front edge of the outwardly swingable stationary frame 3 it causes no hinder when the hatch is thrown out, and the wind deflector 12 further being of a simple structure and visually and aerodynamically forming a unity with the panel 9 in the closed position thereof. In the backwardly slid opened position of the panel 9 the wind deflector 12 effectively prevents the wind from being blown into the roof opening 2 when the vehicle is driving.

**Claims**

1.  Vent and escape hatch for a vehicle, in particular a truck, having an opening (2) in the fixed roof (1), comprising a stationary frame (3) adapted to be placed around the opening (2) in the fixed roof (1) of the vehicle, a panel (9) movably connected to the frame (3) and movable between a closed position in which it closes the opening in the fixed roof, and an open position; a hinge (11) provided on the hatch, with which at least an upper part of the stationary frame (3) can be swung out together with the panel (9) to provide an emergency escape exit, **characterized** in that the panel (9) is adapted to be displaced backwardly from the closed position to an open position, and on the front side of the hatch there being provided a fixed wind deflector (12) secured to the swingable part of the frame (3) and projecting upwardly from this frame (3) so as to prevent the wind from blowing into the opening (2) as the vehicle is driven.

2.  Hatch according to claim 1, wherein the panel (9) projects above the plane of the fixed roof in its closed position, **characterized** in that the wind deflector (12) comprises a stationary part inclining upwardly in backward direction from the front edge of the stationary frame (3) and being adapted to the shape of the panel (9), the upper edge of the stationary part being flush with the upper surface of the panel (9) in the closed position thereof.

3.  Hatch according to claim 1 or 2, **characterized** in that the panel (9) is displaceable backwardly into positions above the fixed roof (1), and vice versa.

4.  Hatch according to claim 1, 2 or 3, **characterized** in that the entire frame (3) together with the panel (9) can be swung out.

**Patentansprüche**

1.  Lüftungs- und Fluchtluke für ein Fahrzeug, insbesondere einen Lastkraftwagen, das eine Öffnung (2) in dem festen Dach (1) aufweist, mit einem feststehenden Rahmen (3), der rings der Öffnung (2) in dem festen Dach (1) des Fahrzeugs anbringbar ist, einem Deckel (9), der bewegbar an den Rahmen (3) angeschlossen ist und zwischen einer Schließposition, in welcher er die Öffnung in dem festen Dach schließt, und einer Offenposition bewegbar ist; einem Gelenk (11) an der Luke, mit dem wenigstens ein oberer Teil des feststehenden Rahmens zusammen mit dem Deckel (9) ausschwenkbar ist, um einen Notfluchtausgang zu schaffen, dadurch gekennzeichnet, daß der Deckel (9) aus der Schließposition heraus nach hinten in eine Offenposition verschiebbar ist und an der Frontseite der Luke ein festgelegter Windabweiser (12) vorgesehen ist, der an dem schwenkbaren Teil des Rahmens (3) befestigt ist und sich von diesem Rahmen (3) aus nach oben erstreckt, derart daß der Wind am Eintreten in die Öffnung (2) gehindert wird, wenn das Fahrzeug fährt.

2.  Luke nach Anspruch 1, wobei der Deckel (9) in seiner Schließposition oberhalb der Ebene des festen Daches absteht, dadurch gekennzeichnet, daß der Windabweiser (12) einen stationären Teil aufweist, der von dem Frontrand des feststehenden Rahmens (3) aus nach hinten und oben geneigt ist und an die Form des Deckels (9) angepaßt ist, wobei die obere Kante des stationären Teils in der Schließposition des Deckels (9) mit dessen oberen Ebene bündig ist.

3.  Luke nach Anspruch 1 oder 2, dadurch gekennzeichnet, daß der Deckel (9) nach hinten in Stellungen über dem festen Dach (1) und zurück verschiebbar ist.

4.  Luke nach Anspruch 1, 2 oder 3, dadurch gekennzeichnet, daß der gesamte Rahmen (3) zusammen mit dem Deckel (9) ausschwenkbar ist.

**Revendications**

1. Trappe de ventilation et de secours pour un véhicule, en particulier un camion, ayant une ouverture (2) dans le toit fixe (1), comportant un cadre fixe (3) destiné à être placé autour de l'ouverture (2) dans le toit fixe (1) du véhicule, un panneau (9) relié de façon mobile au cadre (3) et pouvant être déplacé entre une position fermée, dans laquelle il ferme l'ouverture du toit fixe, et une position ouverte ; une charnière (11) prévue sur la trappe, à l'aide de laquelle au moins une partie supérieure du cadre fixe (3) peut être basculée vers l'extérieur avec le panneau (9) pour former une sortie de secours, caractérisée en ce que le panneau (9) est destiné à être déplacé vers l'arrière depuis la position fermée vers une position ouverte, et en ce qu'il est prévu, sur le côté avant de la trappe, un déflecteur fixe (12) de vent assujetti à la partie basculante du cadre (3) et faisant saillie vers le haut de ce cadre (3) afin d'empêcher le vent de s'engouffrer dans l'ouverture (2) pendant que le véhicule roule.

2. Trappe selon la revendication 1 dans laquelle le panneau (9) passe au-dessus du plan du toit fixe dans sa position fermée, caractérisée en ce que le déflecteur (12) de vent comprend une partie fixe s'inclinant vers le haut et vers l'arrière depuis le bord avant du cadre fixe (3) et adaptée à la forme du panneau (9), le bord supérieur de la partie fixe affleurant la surface supérieure du panneau (9) dans sa position fermée.

3. Trappe selon la revendication 1 ou 2, caractérisée en ce que le panneau (9) peut se déplacer vers l'arrière jusque dans des positions au-dessus du toit fixe (1) et vice versa.

4. Trappe selon la revendication 1, 2 ou 3, caractérisée en ce que le cadre entier (3) peut être basculé vers l'extérieur avec le panneau (9).

EP 0 347 958 B1

fig.1

5

fig.2

fig.3

fig.4